# EUROPEAN PATENT SPECIFICATION

(11) **EP 1 727 107 B1**
(45) Date of publication and mention of the grant of the patent: **16.07.2008**
(21) Application number: 06010752.1
(22) Date of filing: 24.05.2006
(51) Int. Cl.: G08C 17/02, G08C 23/04

(54) **Integrated remote control system**
Integriertes Fernsteuersystem
Système de contrôle à distance intégré

(30) Priority: 24.05.2005 KR 20050043726
(43) Date of publication of application: 29.11.2006
(73) Proprietor: Samsung Electronics Co., Ltd., Suwon-si, Gyeonggi-Do (KR)
(72) Inventor: Park, Ji-Hyun, Yeongtong-gu Suwon-si Gyeonggi-do (KR); Chun, Kyong-Joon, Yeongtong-gu Suwon-si Gyeonggi-do (KR); Kim, Nak-Koo, Yeongtong-gu Suwon-si Gyeonggi-do (KR)
(74) Representative: Grünecker, Kinkeldey, Stockmair & Schwanhäusser Anwaltssozietät

(56) References cited:
- EP-A1- 0 354 459
- WO-A-00/70578
- WO-A2-01/95283
- DE-A1- 19 534 883
- US-A- 5 418 527

## Description

### BACKGROUND OF THE INVENTION

### 1. Field of the Invention

The present invention relates to an integrated remote control system capable of remote-controlling a plurality of electronic devices.

### 2. Description of the Related Art

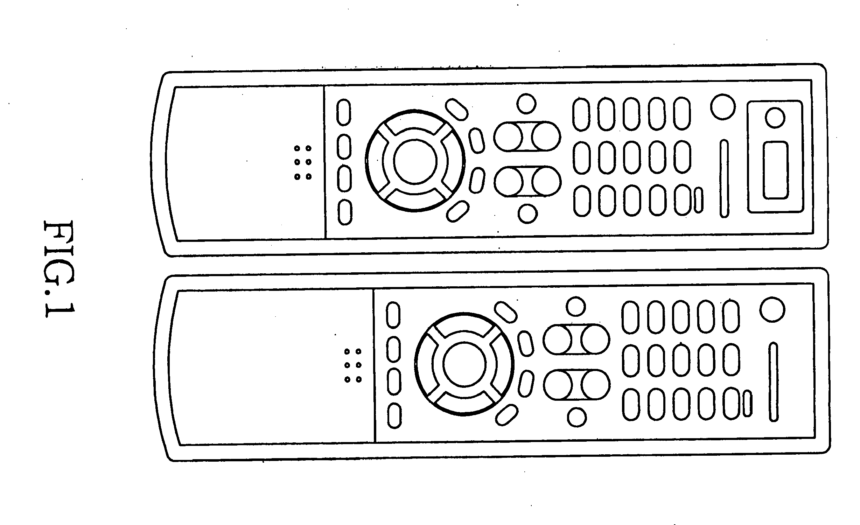

FIG. 1 illustrates a perspective view of conventional integrated remote controllers.

A user must perform several steps in order to view a digital video disk (DVD) by means of the conventional integrated remote controller shown in FIG. 1. First, the user selects a mode of the integrated remote controller as a television (TV) mode by pressing several times on a "MODE" or a device selecting button. In this state, if the user presses a power-on button, the TV is turned on. Then, the user sets the external input of the television as input for a DVD by pressing several times on a "TV/VIDEO" button. Thereafter, the user selects various setting values of the TV, such as an aspect ratio, a sound effect mode, etc., by pressing a "MENU" button and changes the mode of the integrated remote controller to a DVD "MODE" by pressing several times on the "MODE" or the device selecting button. Then, the user turns on the DVD player by pressing a power-on button and then views a DVD by pressing a "PLAY" button.

As described above, the user not only must select a desired electronic device using a device selecting button every times, but also must use several remote controllers as shown in a case wherein a user must turn on the TV in a TV mode, switch the TV mode into a DVD mode so as to turn on the DVD, and then press a "PLAY" button of the DVD player when the user intends to view DVD or cable broadcasting.

In addition, since the conventional integrated remote controller must include modules for generating different infrared channels according to electronic devices in order to remote-control the electronic devices, the costs of manufacturing the conventional integrated remote controller increase. In addition, since the conventional integrated remote controller is manufactured with all infrared channel data according to electronic devices, it is impossible to update the infrared channel data with respect to newly introduced electronic devices. In addition, a remote controller must have a multi-brand remote control (MBR) function embedded in the remote controller in order to remotely control electronic devices of several manufacturing companies, and a user must personally set items for a remote control operation according to electronic devices, or manufacturing companies in order to register electronic devices of other manufacturing companies.

A network remote control system based on a perfect home network system must transmit a remote control signal by connecting all electronic devices to a network, and all electronic devices must include a network module using the same home network protocol. In addition, a user must purchase a high-priced electronic device supporting a home network function, and each manufacturing company constructs a home network system according to its own standard. Accordingly, the manufacturing companies have no method for incorporating their electronic devices with electronic devices of different companies.

In addition, the conventional integrated remote control systems typically allow a user to set an external input of a television or a set-top box using several remote controllers. For example, the user sets external input #1 of the television when viewing a DVD, and the user re-sets external input #2 of the television when viewing cable broadcasting.

Further, when a user uses the conventional remote controller, if there are obstacles in front of an electronic device, a radio control signal is not transmitted to the electronic device, and the user must operate the conventional remote controller once more. In addition, even when a user views cable broadcasting after viewing a DVD, a DVD player is continuously turned on, so that unnecessary power consumption occurs.

US-A-5,418,527 discloses a remote control system for audio/video systems with a remote controller and an A/V system control unit including a re-transmitter. A number of devices are remotely controlled by signals of the A/V system control unit that receives a remote control signal by an infrared ray emitted by a remote control. The remote control can be used for generating remote control signals for plural electronic devices.

WO 00/70578 A discloses a system and method for controlling multiple home electronic devices with a TV receiver, a remote control, and further devices. The remote control transmits an IR command that may also be used to control further devices such as a VCR, DVD, etc. The corresponding device controller of the TV receiver comprises a number of modules or circuitry.

DE 195 34 883 A1 discloses a TV set with a number of circuitry and also a remote controller. An IR signal is transmitted from the remote controller to a receiver as part of the TV set. Further devices are connected to the TV set by a wireless connection.

WO 01/95283 A2 discloses a modular remote control device that includes a first remote and a second remote that may be connected to each other. The first remote is programmable and submits IR signals. The second remote has a number of keys that can be assigned to any function by changing the mapping with the first remote.

EP-A1-0 354 459 discloses a TV set with a remote control submitting IR signals of a particular coding. The TV set comprises a memory and some kind of translator to translate this particular coding into another coding that is used for operating, for example, a VCR. In a learn mode the second remote controller generally used for the VCR can submit its own coding to the TV set which will then be assigned to the corresponding signals from the other remote controller.

### SUMMARY OF THE INVENTION

It is an object of the present invention to provide an integrated remote control system which can be used in quite different ways and which is also adapted to change particular commands.

This object is solved by the features of the independent claims.

Advantageous embodiments are disclosed by the subclaims.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating conventional integrated remote controllers;
FIG. 2 is a block diagram illustrating the structure of an integrated remote control system according to a preferred embodiment of the present invention;
FIG. 3 is a block diagram illustrating the structure of a remote controller according to a preferred embodiment of the present invention;
FIG. 4 is a perspective view illustrating a remote controller according to a preferred embodiment of the present invention;
FIG. 5 is a block diagram illustrating the structure of a remote control signal converting device according to a preferred embodiment of the present invention;
FIGs. 6 and 7 are views illustrating screen examples according to a preferred embodiment of the present invention;
FIG. 8 is a block diagram illustrating the structure of a re-transmitter according to a preferred embodiment of the present invention; and
FIG. 9 is a flowchart illustrating a procedure of remotely controlling a DVD player in an integrated remote control system according to a preferred embodiment of the present invention.

### DETAILED DESCRIPTION OF THE PREFERRED EMBODIMENT

Hereinafter, a preferred embodiment of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

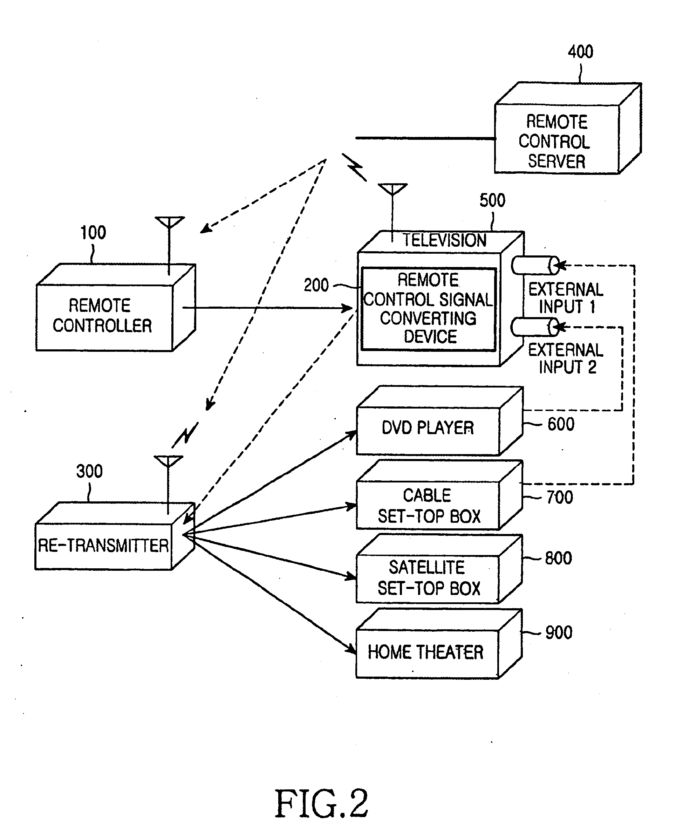

FIG. 2 is a block diagram illustrating the structure of an integrated remote control system according to the present invention.

A remote controller 100 generates radio control signals for plural electronic devices and transmits the radio control signals through a single infrared channel to a remote control signal converting device 200 such that the electronic devices can be integrally remote-controlled. According to the present invention, the electronic devices may be a television 500, a DVD player 600, a cable set-top box 700, a satellite set-top box 800, and a home theater 900.

The remote control signal converting device 200 receives a radio control signal for a predetermined electronic device from the remote controller 100 and transmits the radio control signal to a re-transmitter 300 by inserting infrared channel data for the predetermined electronic device into the received radio control signal. Although the remote control signal converting device 200 is embedded in the television 500 according to an embodiment of the present invention, the remote control signal converting device 200 may be embedded in devices other than the television 500, or may be independently constructed.

The re-transmitter 300 receives a radio control signal including infrared channel data from the remote control signal converting device 200, creates an infrared channel according to the infrared channel data, and re-transmits the radio control signal to the predetermined electronic device through the created infrared channel.

A remote control server 400 stores input module data used for driving a remote control operation over each electronic device and infrared channel data for each electronic device. In the meantime, the user may set a macro command created by integrating at least two remote control commands formed using a device (e.g., a computer) which can be accessed the remote control server 400, or remote control commands frequently used by a user so as to provide the macro command to the remote control server 400. Then, the remote control server 400 generates an input module data used for operating the macro command so as to transmit the input module data to the remote controller 100.

In more detailed description about the macro command, if the remote controller 100 receives input module data used for executing the macro command from the remote control server 400, the remote controller 100 designates a button according to the input module data, or creates a new button through a touch screen scheme. Once the user presses the button, the remote controller 100 generates a radio control signal for executing the macro command according to the pressed button so as to transmit the radio control signal to the remote control converting device 200.

For example, a user may access the remote control server 400 using a computer and set a macro command created by integrating a command of turning on a DVD player and a command of playing the DVD player. The remote control server 400 generates input module data for executing the set macro command so as to transmit the input module data to the remote controller 100. The input module data is used for establishing or creating an input module for executing the macro command. In the above-described example of the macro command for the DVD player, contents of "set an input module for executing a macro command as a DVD play button" may be the input module data. In other words, if a user presses the DVD play button in the remote controller 100, the remote controller 100 generates a radio control signal used for executing a macro command created by integrating a command of turning on the DVD player with a command of playing the DVD player, and transmits the radio control signal to the remote control signal converting device 200.

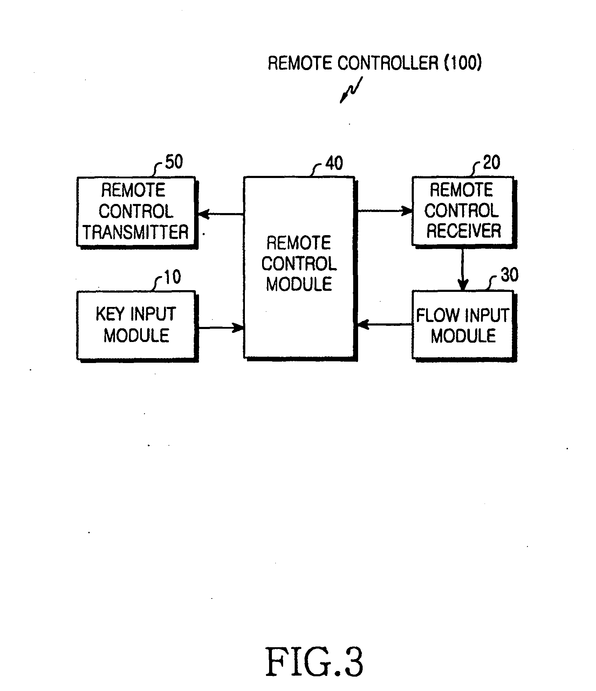

Hereinafter, a description about the remote controller 100, the remote control signal converting device 200, and the re-transmitter 300 included in the integrated remote control system will be described in more detail with respect to FIGs. 3 to 8.

FIG. 3 is a block diagram illustrating the structure of the remote controller 100 according to the present invention.

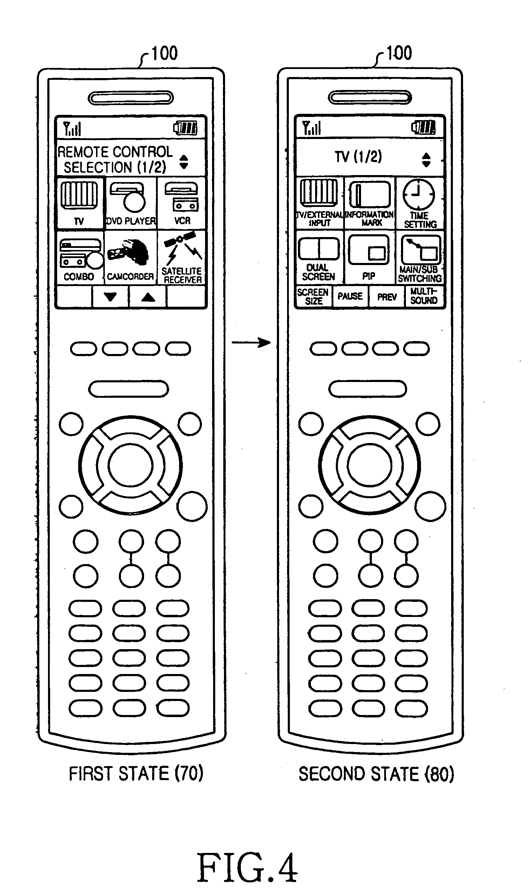

A key input module 10 of the remote controller 100 receives a key input used for remote-controlling plural electronic devices from a user and provides the key input to a remote control module 40. Preferably, the key input module 10 is a fixture input module including rubber buttons. A remote control receiver 20 receives input module data for executing an additional remote control operation from the remote control server 400 so as to output the input module data to a flow input module 30. The flow input module 30 creates an additional input module based on the input module data received from the remote control receiver 20 according to the control of the remote control module 40 so as to provide the additional input module to the touch screen. The touch screen has easy scalability such that each electronic device is modified and displayed with respect to a new additional input module. If the remote control module 40 receives input for remote-controlling a predetermined electronic device through the key input module 10 or the flow input module 30, the remote control module 40 generates a radio control signal for the predetermined electronic device and outputs the radio control signal to the remote control transmitter 50. The remote control transmitter 50 transmits the radio control signal for the predetermined electronic device generated in the remote control module 40 through one infrared channel. A perspective view showing the remote controller 100 having the above-described structure is FIG. 4.

Referring to FIG. 4, in the first state 70 in which the remote controller 100 displays remote-controllable input module for each electronic device as icons on a touch screen, various icons representing TV, DVD PLAYER, VCR, COMBO, CAMCORDER, SATELLITE RECEIVER are displayed on the touch screen. The user can select one icon which represents an electronic device to be remote-controlled, from among the displayed icons. As soon as the user selects one icon, the remote controller displays menu items for remote control of the electronic device corresponding to the selected icon. For example, when the icon of TV has been selected, menu items for remote control of TV are displayed as shown in the second state 80. The user can select and input one of the displayed menu items for the remote control of TV Then, the remote controller 100 transmits a control radio signal corresponding to the user's input.

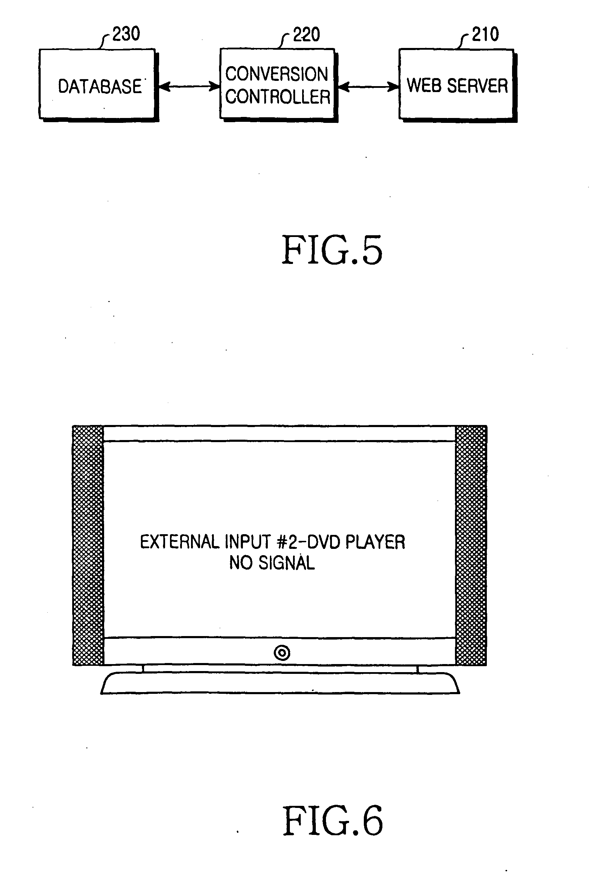

FIG. 5 is a block diagram illustrating the structure of the remote control signal converting device 200 according to the present invention.

A web server 210 of the remote control signal converting device 200 provides a web page for receiving information including a model name or a model number of an electronic device from a user. Accordingly, a user can input information including model names or model numbers of the television 500, the DVD player 600, the cable set-top box 700, the satellite set-top box 800, and the home theater 900 by accessing the web page through the web browser of a computer. The web server 210 accesses the remote control server 400 according to the control of a conversion controller 220 in order to receive infrared channel data for an electronic device corresponding to a model input through the web page. For example, the web server 210 accesses the remote control server 400 so as to receive infrared channel data used for remote controlling the DVD player 600 if the electronic device corresponding to the model input through the web page is the DVD player 600. A database 230 stores infrared channel data received through the web server 210 according to the control of the conversion controller 220.

The conversion controller 220 extracts infrared channel data, which is used for an electronic device remote-controlled by a radio control signal received from the remote controller 100, out of the database 230 and inserts the infrared channel data into the radio control signal so as to transmit the radio control signal to the re-transmitter 300. For example, if the conversion controller 220 receives a radio control signal used for remote-controlling the DVD player 600 from the remote controller 100, the conversion controller 220 extracts infrared channel data for the DVD player 600 from the database 230 and inserts the infrared channel data into the radio control signal, thereby transmitting the radio control signal to the re-transmitter 300.

The conversion controller 220 may use infrared communication, a wireless network, or a wired network in order to transmit a radio control signal including infrared channel data to the re-transmitter 300. The wireless network may be realized as a wireless local area (WLAN) network, or a network constructed through Bluetooth communication, and the wired network may be realized as a network constructed through power line communication (PLC) or IEEE 1394 communication. The IEEE 1394 communication (IEEE 1394 high capacity serial bus; Fire Wire) is one of schemes for connection and communication between a Personal Computer (PC) and peripheral devices and can be expressed as a serial bus existing between a microprocessor of a PC and at least one peripheral device. According to the IEEE 1394 communication, it is possible to mount maximum 63 peripheral devices to one PC by connection of one plug with a socket, and each connected device can transmit data at a speed of maximum 400 Mbps.

In addition, if the remote control signal converting device 200 is connected to electronic devices in a network, the conversion controller 220 may transmit a radio control signal including the infrared channel data to the electronic devices through the network.

When the remote control signal converting device 200 is embedded in the television 500 as shown in FIG. 2, and when a user inputs model names or model numbers of electronic devices through a web browser by accessing a web page of the web server, the user can input a number of an external input port if the electronic devices corresponding to the input model names or the input models are connected to external input ports of the television 500. The user can input setting values of the TV 500 such as an aspect ratio, a sound effect mode, etc., whenever external input is set according to electronic devices connected to an the external input ports of the TV 500, and the input information will be described below.

If a user presses a DVD player selection button included in the key input module of the remote controller 100 in order to view a DVD, the remote control module 40 automatically sets the mode of the remote controller 100 as a DVD player mode. In addition, the remote control module 40 generates a radio control signal for remote-controlling the DVD player 600 and transmits the radio control signal to the remote control signal converting device 200 through the remote control transmitter 50.

The conversion controller 220 receives a radio control signal for remote-controlling the DVD player 600 from the remote controller 100 and determines an external input port of the TV 500 connected to the DVD player 600. If it is determined that the DVD player 600 is connected to the second external input port of the TV 500, the conversion controller 220 sets the number for an external input port of the TV 500 as #2. In addition, the conversion controller 220 determines a setting value for the TV 500 corresponding to the external input #2 as a value previously input by the user. In addition, the conversion controller 220 extracts infrared channel data for the DVD player 600 from the database 230 and inserts the infrared channel data into the received radio control signal, thereby transmitting the radio control signal to the re-transmitter 300.

After external input #2 of the TV 500 is set as described above, the conversion module 220 determines if the signal of the DVD player 600 is input through external input #2 during a predetermined time interval. The predetermined time interval is a value which can be set by a user. If the signal of the DVD player 600 is not input through external input # 2 during a predetermined time interval, the conversion controller 220 performs a control operation such that a statement reporting that "the signal of the DVD player 600 is not input" is expressed on the screen of the TV 500 as shown in FIG. 6. In this case, it may be determined that the re-transmitter 300 having received a radio control signal including infrared channel data for the DVD player 600 fails to re-transmit the radio control signal because a person passes by the DVD player 600 during the re-transmission of the radio control signal for the DVD player 600. Accordingly, since the DVD player 600 does not receive the radio control signal, no signal is output through external input #2 of the TV 500.

Hereinafter, it is assumed that a signal transmitted from the remote controller 100 is a radio control signal for executing a macro command. For example, the transmitted signal may be a radio control signal for executing a macro command created by integrating a command of turning on the DVD player and a command of playing the DVD player. The re-transmitter 300 having received the radio control signal for executing the macro command through the remote control signal converting module 200 re-transmits the radio control signal for executing the first command of turning on the DVD player of the macro command to the DVD player 600. If the re-transmitter fails to re-transmit the radio control signal for executing the first command because a person passes by the DVD player 600 during the re-transmission of the radio control signal, the DVD player 600 is not turned on because the radio control signal is not received. Thereafter, although the DVD player 600 receives a radio control signal for executing the second command of playing the DVD player of the macro command from the re-transmitter 300, the DVD player 600 is not played because the DVD player 600 is not turned on.

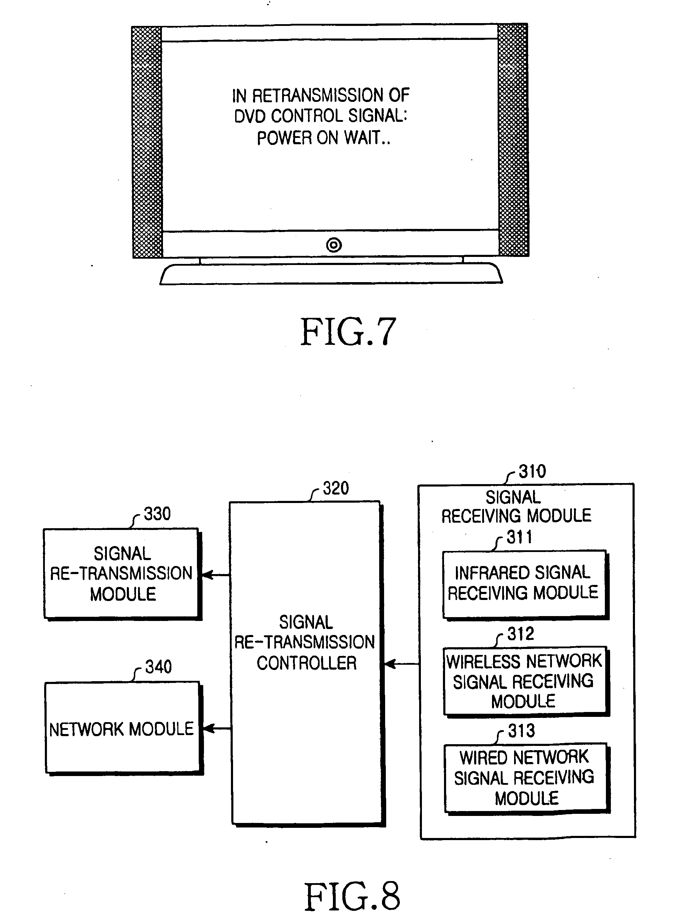

In the above cases, the conversion controller 220 transmits a signal requesting a radio control signal for the DVD player 600 to be re-transmitted to the re-transmitter 300 and performs a control operation such that a statement reporting that a radio control signal for the DVD player 600 is in re-transmission is expressed on the screen of the TV 500 as shown in FIG. 7. Then, the re-transmitter 300 responds to the received re-transmission request signal for the radio control signal so as to re-transmit the radio control signal for the DVD player 600 to the remote control signal converting device 200. In the meantime, the conversion controller 220 determines if the signal of the DVD player 600 is input again through external input #2 during a predetermined time interval. The conversion controller 220 repeatedly performs the above-described operation according to the determination result.

As described above, the signal of the DVD player is checked through an external input so that the DVD player 600 performs an operation initially requested by a user and sequentially performs its operations even when it is remotely controlled under a macro command. Accordingly, a user can view a DVD through only single button manipulation as described above according to the present invention even though transmission of a radio control signal for the DVD player may have failed.

If the conversion controller 220 receives a radio control signal for a new electronic device from the remote controller 100, the conversion controller 220 determines the external input port of the TV 500 set for the new electronic device. For example, it is assumed that external input #2 of the TV 500 is set, in which the DVD player 600 is connected to the TV 500. In other words, it is assumed that a user is viewing a DVD. In this state, if the user presses a cable broadcasting selection button included in the key input module 10 of the remote controller 100 because the user wants to view cable broadcasting, the remote control module 40 automatically sets a mode of the remote controller 100 as a mode for the cable broadcasting. Then, the remote control module 40 generates a radio control signal for remote-controlling the cable set-top box 700 so as to transmit the radio control signal to the remote control signal converting device 200 through the remote control transmitter 50.

The conversion controller 220 determines an external input port of the TV 500 set for the cable set-top box 700 by receiving a radio control signal for remote-controlling the cable set-top box 700 from the remote controller 100. If it is determined that the first external input port of the TV 500 is set for the cable set-top box 700, the conversion controller 220 changes the external input of the TV 500 to external input # 1. In addition, the conversion controller 220 determines a setting value for the TV 500 corresponding to external input #1 as a setting value previously input by the user.

Then, the conversion controller 220 transmits a signal requesting pause of an operation of the DVD player 600 relating to external input # 2 of the TV 500 to the re-transmitter 300 because a user may want to view the DVD again after viewing cable broadcasting for a moment. Accordingly, the re-transmitter 300 transmits a radio control signal for temporarily stopping the operation of the DVD player 600 to the remote control signal converting device 200. Therefore, the operation of the DVD player 600 relating to external input # 2 of the TV 500 is temporarily stopped, and the conversion controller 220 determines if the radio control signal for the DVD player 600 is received from the remote controller 100 during a predetermined time interval. The predetermined time interval may be set by the user.

If it is determined that the radio control signal for the DVD player 600 is not received, the conversion controller 220 transmits a signal requesting to turn the temporarily stopped DVD player 600 off to the re-transmitter 300. Therefore, the re-transmitter 300 transmits a radio control signal for turning the DVD player 600 off to the remote control signal converting device 200.

In contrast, if the radio control signal for the DVD player 600 is received, the conversion controller 220 changes external input #1 of the TV 500 to external number # 2. In addition, the conversion controller 220 transmits a request signal of re-playing the temporarily stopped DVD player 600 to the re-transmitter 300. Therefore, the re-transmitter 300 transmits a radio control signal for re-playing the DVD player 600 to the remote control signal converting device 200. Then, the conversion controller 220 determines if the radio control signal for the cable set-top box 700 is received from the remote controller 100 during a predetermined time interval as described above. The conversion controller 220 repeatedly performs the above-described operation according to the determination result.

FIG. 8 is a block diagram illustrating the structure of the re-transmitter 300 according to the present invention.

A signal receiving module 310 of the re-transmitter 300 receives a radio control signal including the infrared channel data from the remote control signal converting device 200 so as to output the radio control signal to a signal re-transmission controller 320. If the radio control signal including infrared channel data, which is output from the signal receiving module 310, is a signal for executing a macro command, the signal re-transmission controller 320 sequentially generates radio control signals for executing the macro command and outputs the radio control signals to a signal re-transmission module 330. The signal re-transmission module 330 generates an infrared channel according to infrared channel data included in the radio control signal output from the signal re-transmission controller 320 and re-transmits the radio control signal to a destination electronic device through the infrared channel. The signal re-transmission module 330 includes various sensors in order to create infrared channels for remote-controlling electronic devices.

The remote control signal converting device 200 transmits a radio control signal including the infrared channel data to the re-transmitter 300 through infrared communication, a wireless network, or a wired network. To this end, the signal receiving module 310 includes an infrared signal receiving module 311, a wireless network signal receiving module 312, and a wired network signal receiving module 313.

A network module 340 transmits/receives a radio control signal including the infrared channel data to/from another re-transmitter having the same structure as the re-transmitter 300 under the control of the signal re-transmission controller 320. If an electronic device, which is to receive the radio control signal having received through the signal receiving module 310, is in a blanket area, the signal re-transmission controller 320 transmits the radio control signal to another re-transmitter in the blanket area through the network module 340. Accordingly, the re-transmitter in the blanket area re-transmits the received radio control signal to a destination electronic device.

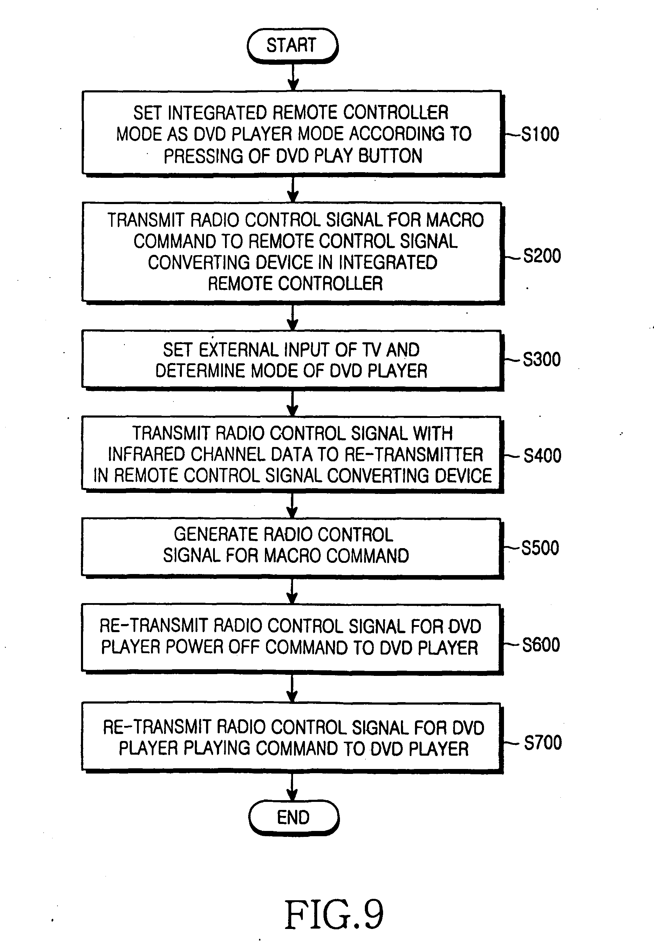

Hereinafter, a procedure of controlling a DVD player when a user simply presses a DVD play button included in the key input module 10 of the remote controller 100 in the integrated remote control system according to the present invention will be described in more detail with respect to the flowchart of FIG. 9.

If a user presses a DVD play button included in the key input module 10 of the remote controller 100, the remote control module 40 automatically sets a mode of the remote controller 100 as a mode for the DVD player in step S100. In step S200, the remote control module 40 generates radio control signals for executing a macro command created by integrating a command of turning on the DVD player and a command of playing the DVD player so as to transmit the radio control signals to the remote control signal converting device 200.

The conversion controller 220 of the remote control signal converting device 200 having received the radio control signals for executing the macro command sets an external input of the TV 500 according to the number for an external input port set for the DVD player 600. In addition, the conversion controller 220 determines a setting value for the TV 500 corresponding to the external input for the DVD player 600 as a setting value previously input by a user in step S300. In addition, the conversion controller 220 extracts infrared channel data for the DVD player 600 from the database 230, inserts the infrared channel data into the received radio control signal, and then transmits the radio control signal to the re-transmitter 300 in step S400.

Accordingly, the signal receiving module 310 of the re-transmitter 300 receives a radio control signal including the infrared channel data from the remote control signal converting device 200 and outputs the radio control signal to the signal re-transmission controller 320. Since the radio control signal including infrared channel data output from the signal receiving module 310 is used for executing the macro command, the signal re-transmission controller 320 sequentially generates radio control signals for executing the macro command (i.e., a radio control signal for executing a command of turning on the DVD player and a radio control signal for executing a command of playing the DVD player) and outputs the radio control signals to the signal re-transmission module 330 in step S500.

The signal re-transmission module 330 generates an infrared channel according to the infrared channel data and re-transmits the radio control signals sequentially output from the signal re-transmission controller 320 to the DVD player 600 through the generated infrared channel. In other words, the signal re-transmission module 330 receives the radio control signal for executing the command of turning on the DVD player from the signal re-transmission controller 320 so as to re-transmit the radio control signal to the DVD player 600 through the infrared channel in step S600. Accordingly, the DVD player 600 is turned on.

Thereafter, the signal re-transmission module 330 receives the radio control signal for executing the command of playing the DVD player from the signal re-transmission controller 320 and re-transmits the radio control signal to the DVD player 600 through the infrared channel in step S700. Accordingly, the DVD player plays the DVD. Thus, a user can view a DVD by pressing a single button.

As described above, according to the present invention, an integrated remote control system including a remote controller, a remote control signal converting device, and a re-transmitter is provided, so that a user can integrally remote-control all electronic devices through a simple manipulation. Accordingly, convenience of the user in using the electronic devices is increased.

In addition, a macro command is provided, so that a user can execute frequently-used remote control commands or fixed commands through manipulation of a single button.

Additionally, data of a remote controller are remotely upgraded through a network, so that it is possible to easily remote-control new electronic devices, and a user can personally upgrade data of a remote controller through a computer.

In addition, a remote controller including a fixture button and a touch screen is provided, so that it is possible to easily add or modify an input module for remote-controlling new electronic devices without additional upgrade of hardware.

Additionally, a remote controller simply makes communication with only a remote control signal converting device, so that it is unnecessary for the remote controller to include modules which create infrared channels used for remote-controlling various electronic devices. Accordingly, it is possible to reduce the costs of manufacturing the remote controller.

Furthermore, an integrated remote control system according to the present invention automatically sets external input whenever a remotely controlled electronic device is changed, so that it is unnecessary for a user to frequently re-set the external input. Therefore, the user enjoys increased convenience.

It is determined if a predetermined signal is input to an external input port connected to a remotely-controlled electronic device, so that it is possible to provide a state of each electronic device to a user. Additionally, it is determined if a predetermined signal is input to an external input port connected to a remotely-controlled electronic device, so that it is possible to exactly remote-control an electronic device by requesting a control signal which is not transmitted. Further, it is determined if a predetermined signal is input to an external input port connected to a remotely-controlled electronic device, so that an unused electronic device is turned off. Accordingly, it is possible to prevent unnecessary power consumption.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims and equivalents thereof.

## Claims

1. A remote control system comprising:
a remote controller (100) for generating remote control signals for plural electronic devices (500,600,700,800,900) and for transmitting the remote control signals through one infrared channel such that each of the electronic devices can be remote-controlled;
a remote control signal converting device (200) for receiving said remote control signal controlling a predetermined electronic device from the remote controller (100) and transmitting the received remote control signal with inserted infrared channel data for the predetermined electronic device, and
a re-transmitter (300) for receiving the remote control signal including the infrared channel data from the remote control signal converting device (200), generating an infrared channel according to the infrared channel data, and re-transmitting the remote control signal to the predetermined electronic device (600,700,800,900) through the infrared channel,
**characterized in that**
the system further comprises a remote control server (400) for storing input module data used for driving remote control operations of the electronic devices (500,600,700,800,900), and a device, connectable to the remote control server (400), to provide a macro command to the remote control server (400), wherein said macro command is set by a user to integrate at least two remote control commands using said device, and wherein the remote control server (400) is adapted to generate input module data used for driving the macro command and to transmit the input module data to the remote controller (100).

2. The system as claimed in claim 1, wherein the remote controller (100) comprises:
a key input module (10) for receiving a key input used for remotely controlling said plurality of electronic devices from a user;
a remote control receiving module (20) for receiving input module data used for performing an additional remote control operation from the remote control server (400);
a flow input module (30) for creating an additional input module based on the input module data received through the remote control receiving module and providing the input module through a touch screen;
a remote control module (40) for generating a remote control signal for a predetermined electronic device if input for remotely controlling the predetermined electronic device is received through the key input module (10) and the flow input module (30); and
a remote control transmitting module (50) for transmitting the remote control signal generated from the remote control module (40) through one infrared channel.

3. The system as claimed in claim 1, wherein the remote control server (400) comprises a storage means for storing infrared channel data for the electronic devices.

4. The system as claimed in claim 3, wherein the remote control signal converting device (200) comprises:
a web server (210) for accessing the remote control server (400) in order to receive infrared channel data for an electronic device having a corresponding model name, or a corresponding model number if a user inputs the model number or the model name of the electronic device;
a database (230) for storing infrared channel data received through the web server (210); and
a conversion controller (220) for extracting from the database (230) infrared channel data for the electronic device corresponding to the remote control signal received in the remote controller (100), inserting the infrared channel data into the remote control signal, and transmitting the remote control signal to the re-transmitter.

5. The system as claimed in claim 4, wherein the conversion controller (220) is adapted to transmit the remote control signal including the infrared channel data to the re-transmitter (300) through infrared communication.

6. The system as claimed in claim 4, wherein the conversion controller (220) is adapted to transmit the remote control signal including the infrared channel data to the re-transmitter through a wireless network.

7. The system as claimed in claim 6, wherein the wireless network is constructed based on one of a wireless local area network and Bluetooth communication.

8. The system as claimed in claim 4, wherein the conversion controller (220) is adapted to transmit the remote control signal including the infrared channel data to the re-transmitter through a wired network.

9. The system as claimed in claim 8, wherein the wired network is constructed based on one of power line communication (PLC), or 1394 communication.

10. The system as claimed in claim 4, wherein, the remote control signal converting device (200) is connected to said electronic devices via a network, wherein the conversion controller (220) is adapted to transmit the remote control signal including the infrared channel data to the electronic devices through the network.

11. The system as claimed in claim 4, wherein, the remote control signal converting device is embedded in a video providing device (500), and the conversion controller (220) is adapted to receive external input numbers of electronic devices, which are connected to external input ports of the video providing device, from a user.

12. The system as claimed in claim 11, wherein the conversion controller (220) is adapted to receive from a user setting values for the video providing device (500) according to the electronic devices connected to the external input ports.

13. The system as claimed in claim 11, wherein an electronic device corresponding to the remote control signal received from the remote controller (100) is connected to the external input port of the video providing device (500) and the conversion controller (220) is adapted to set the external input of the video providing device as an external input number for the electronic device, which corresponds to the remote control signal.

14. The system as claimed in claim 13, wherein the conversion controller (220) is adapted to determine a setting value of the video providing device corresponding to the set external input as a setting value previously input from a user.

15. The system as claimed in claim 14, wherein, if a signal of the predetermined electronic device is not input through the set external input during a predetermined time interval, the conversion controller (220) is adapted to transmit a request signal for re-transmission of the remote control signal for the predetermined electronic device to the re-transmitter (300).

16. The system as claimed in claim 15, wherein, if the re-transmitter (300) receives the request signal for re-transmission of the remote control signal from the remote control signal converting device (200), the re-transmitter is adapted to re-transmit a remote control signal corresponding to the request signal for the re-transmission to the remote control signal converting device.

17. The system as claimed in claim 15, wherein, if the signal of the predetermined electronic device is not input through the set external input during the predetermined time interval, the conversion controller (220) is adapted to perform a control operation such that a statement representing that the signal of the predetermined electronic device is not input is expressed on a screen of the video providing device.

18. The system as claimed in claim 15, wherein the conversion controller (220) is adapted to transmit the request signal for the re-transmission of the remote control signal and to perform a control operation such that a statement representing that a remote control signal for the predetermined electronic device is in progress is expressed on a screen of the video providing device.

19. The system as claimed in claim 15, wherein, if the conversion controller (220) receives a remote control signal for a new predetermined electronic device connected to an external input port of the video providing device from the remote controller (100), the conversion controller is adapted to change the external input of the video providing device as an external input number set for the new predetermined electronic device.

20. The system as claimed in claim 19, wherein, if the external input of the video providing device (500) is changed, the conversion controller is adapted to transmit a request signal for temporarily stopping a predetermined electronic device corresponding to previous external input to the re-transmitter, thereby temporarily stopping an operation of the electronic device corresponding to the previous external input.

21. The system as claimed in claim 20, wherein, if the re-transmitter receives the request signal for temporarily stopping the predetermined electronic device from the remote control signal converting device, the re-transmitter is adapted to transmit a remote control signal corresponding to the request signal to the remote control signal converting device.

22. The system as claimed in claim 21, wherein the conversion controller (220) is adapted to transmit a request signal for turning off the pausing electronic device corresponding to the previous external input if a predetermined time interval elapses.

23. The system as claimed in claim 22, wherein, if the re-transmitter (300) receives the request signal for turning off the predetermined electronic device from the remote control signal converting device, the re-transmitter is adapted to transmit a remote control signal corresponding to the request signal to the remote control signal converting signal.

24. The system as claimed in claim 20, wherein, if the conversion controller (220) receives a remote control signal for the electronic device corresponding to the previous external input, the conversion controller is adapted to change a current external input of the video providing device into an external input for the electronic device and to transmit a request signal for re-operating the electronic device to the remote control signal converting device.

25. The system as claimed in claim 24, wherein, if the re-transmitter (300) receives the request signal for re-operating the electronic device from the remote control signal converting device, the re-transmitter is adapted to transmit a remote control signal corresponding to the request signal to the remote control signal converting device.

26. The system as claimed in claim 4, wherein the re-transmitter (300) comprises:
a signal receiving module (310) for receiving a remote control signal including the infrared channel data from the remote control signal converting device;
a signal re-transmission controller (320) for sequentially generating remote control signals including commands according to a macro command if the remote control signal, which includes the infrared channel data, received through the signal receiving module is a signal for executing the macro command; and
a signal re-transmitting module (330) for generating an infrared channel according to the infrared channel data included in the remote control signal output from the signal re-transmission controller and re-transmitting the remote control signal to a destination electronic device through the infrared channel.

27. The system as claimed in claim 26, wherein the signal receiving module (310) includes an infrared signal receiving module (311) which receives the remote control signal transmitted thereto through infrared communication from the remote control signal converting device.

28. The system as claimed in claim 26, wherein the signal receiving module (310) includes a wireless network signal receiving module (313) which receives the remote control signal transmitted thereto through a wireless network from the remote control signal converting device.

29. The system as claimed in claim 28, wherein the wireless network is constructed based on one of a wireless local area network (WLAN) or Bluetooth communication.

30. The system as claimed in claim 26, wherein the signal receiving module (310) includes a wired network signal receiving module (313) which receives the remote control signal transmitted thereto through a wired network from the remote control signal converting device.

31. The system as claimed in claim 30, wherein the wired network is constructed based on one of a power line communication (PLC) and 1394 communication.

32. The system as claimed in claim 26, further comprising a network module (340) for transmitting/receiving the remote control signal including the infrared channel data to/from another re-transmitter having an identical structure,
wherein the signal re-transmission controller (320) is adapted to re-transmit the remote control signal to another re-transmitter having an identical structure in a blanket area through the network module in order to transmit the remote control signal received through the signal receiving module to an electric device in a blanket area.

## Patentansprüche

1. Fernsteuersystem, enthaltend:
eine Fernsteuereinheit (100), die Fernsteuersignale für mehrere elektronische Vorrichtungen (500, 600, 700, 800, 900) erzeugt und die Fernsteuersignale durch einen Infrarotkanal derart sendet, dass jede der elektronischen Vorrichtungen ferngesteuert werden kann;
eine Fernsteuersignal-Umwandlungsvorrichtung (200), die das Fernsteuersignal, das eine vorbestimmte elektronische Vorrichtung steuert, von der Fernsteuereinheit (100) empfängt und das empfangene Fernsteuersignal mit eingefügten Infrarotkanaldaten für die vorbestimmte elektronische Vorrichtung sendet, und
einen Weiter-Sender (300), der das Fernsteuersignal, das die Infrarotkanaldaten enthält, von der Fernsteuersignal-Umwandlungsvorrichtung (200) empfängt, einen Infrarotkanal gemäß den Infrarotkanaldaten erzeugt und das Fernsteuersignal zur vorbestimmten elektronischen Vorrichtung (600, 700, 800, 900) durch den Infrarotkanal weitersendet,
**dadurch gekennzeichnet, dass**
das System weiterhin einen Fernsteuer-Server (400), der Eingabemoduldaten speichert, die zum Ansteuern von Fernsteuertätigkeiten der elektronischen Vorrichtungen (500, 600, 700, 800, 900) verwendet werden, und eine Vorrichtung enthält, die mit dem Fernsteuer-Server (400) verbunden werden kann, um einen Makrobefehl dem Fernsteuer-Server (400) bereitzustellen, wobei dieser Makrobefehl von einem Benutzer eingestellt wird, um wenigstens zwei Fernsteuerbefehle mit Hilfe dieser Vorrichtung zu integrieren, und der Fernsteuer-Server (400) dazu eingerichtet ist, Eingabemoduldaten zu erzeugen, die zum Ansteuern des Makrobefehls verwendet werden, und die Eingabemoduldaten zur Fernsteuereinheit (100) zu senden.

2. System nach Anspruch 1, bei dem die Fernsteuereinheit (100) enthält:
ein Tasteneingabemodul (10), das eine Tasteneingabe, die zum fernsteuern der Vielzahl elektronischer Vorrichtungen verwendet wird, von einem Benutzer empfängt;
ein Fernsteuer-Empfangsmodul (20), das Eingabemoduldaten, die verwendet werden, um eine zusätzliche Fernsteuertätigkeit auszuführen, vom Fernsteuer-Server (400) empfängt;
ein Flusseingabemodul (30), das ein zusätzliches Eingabemodul auf der Basis der Eingabemoduldaten erzeugt, die durch das Fernsteuer-Empfangsmodul empfangen werden, und das Eingabemodul durch einen Tastbildschirm bereitstellt;
ein Fernsteuermodul (40), das ein Fernsteuersignal für eine vorbestimmte elektronische Vorrichtung erzeugt, sofern eine Eingabe zum Fernsteuern der vorbestimmten elektronischen Vorrichtung durch das Tasteneingabemodul (10) und das Flusseingabemodul (30) empfangen wird; und
ein Fernsteuer-Sendemodul (50), das das Fernsteuersignal, das vom Fernsteuermodul (40) erzeugt wird, durch den Infrarotkanal sendet.

3. System nach Anspruch 1, bei dem der Fernsteuer-Server (400) eine Speichereinrichtung enthält, die Infrarotkanaldaten für die elektronischen Vorrichtungen speichert.

4. System nach Anspruch 3, bei dem die Fernsteuersignal-Umwandlungsvorrichtung (200) enthält:
einen Web-Server (210), der auf den Fernsteuer-Server (400) zugreift, um Infrarotkanaldaten für eine elektronische Vorrichtung zu empfangen, die einen entsprechenden Modellnamen oder eine entsprechende Modellnummer hat, sofern ein Benutzer die Modellnummer oder den Modellnamen der elektronischen Vorrichtung eingibt;
eine Datenbank (230), die Infrarotkanaldaten speichert, die durch den Web-Server (210) empfangen werden; und
eine Umwandlungs-Steuereinheit (220), die aus der Datenbank (230) Infrarotkanaldaten für die elektronische Vorrichtung entsprechend dem Fernsteuersignal extrahiert, das in Fernsteuereinheit (100) empfangen wird, die Infrarotkanaldaten in das Fernsteuersignal einfügt und das Fernsteuersignal zum Rück-Sender sendet.

5. System nach Anspruch 4, bei dem die Umwandlungs-Steuereinheit (220) dazu eingerichtet ist, das Fernsteuersignal, das die Infrarotkanaldaten enthält, zum Weiter-Sender (300) durch Infrarotkommunikation zu senden.

6. System nach Anspruch 4, bei dem die Umwandlungs-Steuereinheit (220) dazu eingerichtet ist, das Fernsteuersignal, das die Infrarotkanaldaten enthält, zum Rück-Sender durch ein Drahtlosnetzwerk zu senden.

7. System nach Anspruch 6, bei dem das Drahtlosnetzwerk auf der Basis eines Drahtlos-Nahbereichsnetzwerkes oder einer Bluetooth-Kommunikation aufgebaut ist.

8. System nach Anspruch 4, bei dem die Umwandlungs-Steuereinheit (220) dazu eingerichtet ist, das Fernsteuersignal, das die Infrarotkanaldaten enthält, zum Rück-Sender durch ein drahtgebundenes Netzwerk zu senden.

9. System nach Anspruch 8, bei dem das drahtgebundene Netzwerk auf der Basis einer Netzleitungs-Kommunikation (PLC) oder einer 1394-Kommunikation aufgebaut ist.

10. System nach Anspruch 4, bei dem die Fernsteuersignal-Umwandlungsvorrichtung (200) mit den elektronischen Vorrichtungen über ein Netzwerk verbunden ist, wobei die Umwandlungs-Steuereinheit (220) dazu eingerichtet ist, das Fernsteuersignal, das die Infrarotkanaldaten enthält, zu den elektronischen Vorrichtungen durch das Netzwerk zu senden.

11. System nach Anspruch 4, bei dem die Fernsteuersignal-Umwandlungsvorrichtung in einer Videobereitstellungsvorrichtung (500) eingebettet ist und die Umwandlungs-Steuereinheit (220) dazu eingerichtet ist, externe Eingabenummern elektronischer Vorrichtungen, die mit externen Eingabeanschlüssen der Videobereitstellungsvorrichtung verbunden sind, von einem Benutzer zu empfangen.

12. System nach Anspruch 11, bei dem die Umwandlungs-Steuereinheit (220) dazu eingerichtet ist, von einem Benutzer Einstellwerte für die Videobereitstellungsvorrichtung (500) gemäß den elektronischen Vorrichtungen zu empfangen, die mit den externen Eingabeanschlüssen verbunden sind.

13. System nach Anspruch 11, bei dem eine elektronische Vorrichtung entsprechend dem Fernsteuersignal, das von der Fernsteuereinheit (100) empfangen wird, mit dem externen Eingabeanschluss der Videobereitstellungsvorrichtung (500) verbunden ist und die Umwandlungs-Steuereinheit (220) dazu eingerichtet ist, die externe Eingabe der Videobereitstellungsvorrichtung als eine externe Eingabezahl für die elektronische Vorrichtung einzustellen, die dem Fernsteuersignal entspricht.

14. System nach Anspruch 13, bei dem die Umwandlungs-Steuereinheit (220) dazu eingerichtet ist, einen Einstellwert der Videobereitstellungsvorrichtung entsprechend der eingestellten externen Eingabe als einen Einstellwert zu bestimmen, der zuvor von einem Benutzer eingegeben wurde.

15. System nach Anspruch 14, bei dem, wenn ein Signal der vorbestimmten elektronischen Vorrichtung nicht durch die eingestellte externe Eingabe während eines vorbestimmten Zeitintervalls eingegeben wird, die Umwandlungs-Steuereinheit (220) dazu eingerichtet ist, ein Anfragesignal für die Weitersendung des Fernsteuersignals für die vorbestimmte elektronische Vorrichtung zum Weiter-Sender (300) zu senden.

16. System nach Anspruch 15, bei dem, wenn der Weiter-Sender (300) das Anfragesignal für die Rücksendung des Fernsteuersignals von der Fernsteuersignal-Umwandlungsvorrichtung (200) empfängt, der Weiter-Sender dazu eingerichtet ist, ein Fernsteuersignal entsprechend dem Anfragesignal für die Weitersendung zur Fernsteuersignal-Umwandlungsvorrichtung zu senden.

17. System nach Anspruch 15, bei dem, wenn das Signal der vorbestimmten elektronischen Vorrichtung nicht durch die eingestellte externe Eingabe während des vorbestimmten Zeitintervalls eingegeben wird, die Umwandlungs-Steuereinheit (220) dazu eingerichtet ist, eine Steuertätigkeit derart auszuführen, dass ein Hinweis, der repräsentiert, dass das Signal der vorbestimmten elektronischen Vorrichtung nicht eingegeben ist, auf einem Bildschirm der Videobereitstellungsvorrichtung dargestellt wird.

18. System nach Anspruch 15, bei dem die Umwandlungs-Steuereinheit (220) dazu eingerichtet ist, das Anfragesignal für die Weitersendung des Fernsteuersignals zu senden und eine Steuertätigkeit derart auszuführen, dass ein Hinweis, der anzeigt, dass ein Fernsteuersignal, für die vorbestimmte elektronische Vorrichtung im Fortschritt ist, auf einem Bildschirm einer Videobereitstellungsvorrichtung angezeigt wird.

19. System nach Anspruch 15, bei dem, wenn die Umwandlungs-Steuereinheit (220) ein Fernsteuersignal für eine neue vorbestimmte elektronische Vorrichtung, die mit einem externen Eingabeanschluss der Videobereitstellungsvorrichtung verbunden ist, von der Fernsteuereinheit (100) empfängt, die Umwandlungs-Steuereinheit dazu eingerichtet ist, die externe Eingabe der Videobereitstellungsvorrichtung als eine externe Eingabezahl zu ändern, die für die neue vorbestimmte elektronische Vorrichtung eingestellt ist.

20. System nach Anspruch 19, bei dem, wenn die externe Eingabe der Videobereitstellungsvorrichtung (500) geändert wird, die Umwandlungs-Steuereinheit dazu eingerichtet ist, ein Anfragesignal für das vorübergehende Stoppen einer vorbestimmten elektronischen Vorrichtung entsprechend einer vorherigen externen Eingabe zum Weiter-Sender zu senden, wodurch vorübergehend eine Tätigkeit der elektronischen Vorrichtung entsprechend der vorherigen externen Eingabe gestoppt wird.

21. System nach Anspruch 20, bei dem, wenn der Weiter-Sender das Anfragesignal zum vorübergehenden Stoppen der vorbestimmten elektronischen Vorrichtung von der Fernsteuersignal-Umwandlungsvorrichtung empfängt, der Weiter-Sender dazu eingerichtet ist, ein Fernsteuersignal entsprechend dem Anfragesignal zur Fernsteuersignal-Umwandlungsvorrichtung zu senden.

22. System nach Anspruch 21, bei dem die Umwandlungs-Steuereinheit (220) dazu eingerichtet ist, ein Anfragesignal zum Abschalten der pausierenden elektronischen Vorrichtung entsprechend der vorherigen externen Eingabe zu senden, wenn ein vorbestimmtes Zeitintervall verstrichen ist.

23. System nach Anspruch 22, bei dem, wenn der Weiter-Sender (300) das Anfragesignal zum Abschalten der vorbestimmten elektronischen Vorrichtung von der Fernsteuersignal-Umwandlungsvorrichtung empfängt, der Weiter-Sender dazu eingerichtet ist, ein Fernsteuersignal entsprechend dem Anfragesignal zur Fernsteuersignal-Umwandlungsvorrichtung zu senden.

24. System nach Anspruch 20, bei dem, wenn die Umwandlungs-Steuereinheit (220) ein Fernsteuersignal für die elektronische Vorrichtung entsprechend der vorherigen externen Eingabe empfängt, die Umwandlungs-Steuereinheit dazu eingerichtet ist, eine momentane externe Eingabe der Videobereitstellungsvorrichtung in eine externe Eingabe für die elektronische Vorrichtung zu ändern und ein Anfragesignal für die Wiederbetätigung der elektronischen Vorrichtung zur Fernsteuersignal-Umwandlungsvorrichtung zu senden.

25. System nach Anspruch 24, bei dem, wenn der Weiter-Sender (300) das Anfragesignal zur Widerbetätigung der elektronischen Vorrichtung von der Fernsteuersignal-Umwandlungsvorrichtung empfängt, der Weiter-Sender dazu eingerichtet ist, ein Fernsteuersignal entsprechend dem Anfragesignal zur Fernsteuersignal-Umwandlungsvorrichtung zu senden.

26. System nach Anspruch 4, bei dem der Weiter-Sender (300) enthält:
ein Signalempfangsmodul (310), das ein Fernsteuersignal, das die Infrarotkanaldaten enthält, von der Fernsteuersignal-Umwandlungsvorrichtung empfängt;
eine Signalrücksende-Steuereinheit (320), die nacheinander Fernsteuersignale erzeugt, die Befehle gemäß einem Makrobefehl enthalten, sofern das Fernsteuersignal, das die Infrarotkanaldaten enthält und durch das Signalempfangsmodul empfangen wird, ein Signal zum Ausführen des Makrobefehls ist; und
ein Signal-Weitersendemodul (330), das einen Infrarotkanal gemäß der Infrarotkanaldaten erzeugt, die im Fernsteuersignal enthalten sind, das aus der Signalweitersende-Steuereinheit ausgegeben wird, und das Fernsteuersignal zu einer bestimmten elektronischen Vorrichtung durch den Infrarotkanal weitersendet.

27. System nach Anspruch 26, bei dem das Signalempfangsmodul (310) ein Infrarotsignal-Empfangsmodul (311) enthält, das das Fernsteuersignal empfängt, das zu ihm durch die Infrarotkommunikation von der Fernsteuersignal-Umwandlungsvorrichtung gesendet wird.

28. System nach Anspruch 26, bei dem das Signalempfangsmodul (310) ein Drahtlosnetzwerk-Signalempfangsmodul (313) enthält, das das Fernsteuersignal empfängt, das zu ihm durch ein Drahtlosnetzwerk von der Fernsteuersignal-Umwandlungsvorrichtung gesendet wird.

29. System nach Anspruch 28, bei dem das Drahtlosnetzwerk auf der Basis eines drahtlosen Nahbereichsnetzwerks (WLAN) oder einer Bluetooth-Kommunikation aufgebaut ist.

30. System nach Anspruch 26, bei dem das Signalempfangsmodul (310) ein Signalempfangsmodul (313) für ein drahtgebundenes Netzwerk enthält, das das Fernsteuersignal empfängt, das zu ihm durch ein drahtgebundenes Netzwerk von der Fernsteuersignal-Umwandlungsvorrichtung gesendet wird.

31. System nach Anspruch 30, bei dem das drahtgebundene Netzwerk auf der Basis einer Netzleitungs-Kommunikation (PLC) oder einer 1394-Kommunikation aufgebaut ist.

32. System nach Anspruch 26, weiterhin enthaltend ein Netzwerkmodul (340) zum Senden/Empfangen des Fernsteuersignals, das die Infrarotkanaldaten enthält, zu/von einem weiteren Weiter-Sender, der einen identischen Aufbau hat,
wobei die Signalweitersende-Steuereinheit (320) dazu eingerichtet ist, das Fernsteuersignal zu einem weiteren Weiter-Sender, der einen identischen Aufbau hat, in einem Wirkungsgebiet durch das Netzwerkmodul zurückzusenden, um das Fernsteuersignal, das durch das Signalempfangsmodul empfangen wird, zu einer elektrischen Vorrichtung in einem Wirkungsgebiet zu senden.

## Revendications

1. Système de télécommande comportant :
une unité de télécommande (100) destinée à générer des signaux de télécommande pour plusieurs dispositifs électroniques (500, 600, 700, 800, 900) et à émettre les signaux de télécommande par l'intermédiaire d'un canal infrarouge de manière que chacun des dispositifs électroniques puisse être télécommandé ;
un dispositif (200) de conversion de signal de télécommande destiné à recevoir ledit signal de télécommande commandant un dispositif électronique prédéterminé provenant de l'unité de télécommande (100) et à émettre le signal de télécommande reçu avec des données insérées de canal infrarouge pour le dispositif électronique prédéterminé, et
un réémetteur (300) destiné à recevoir le signal de télécommande comprenant les données de canal infrarouge provenant du dispositif (200) de conversion de signal de télécommande, à générer un canal infrarouge conformément aux données de canal infrarouge et à réémettre le signal de télécommande vers le dispositif électronique prédéterminé (600, 700, 800, 900) en passant par le canal infrarouge,
**caractérisé en ce que**
le système comporte en outre un serveur de télécommande (400) destiné à stocker des données de module d'entrée utilisées pour piloter des opérations de télécommande des dispositifs électroniques (500, 600, 700, 800, 900), et un dispositif pouvant être connecté au serveur de télécommande (400) pour fournir un macro-ordre au serveur de télécommande (400), dans lequel ledit macro-ordre est établi par un utilisateur pour intégrer au moins deux ordres de télécommande en utilisant ledit dispositif, et dans lequel le serveur de télécommande (400) est conçu pour générer des données de module d'entrée utilisées pour piloter le macro-ordre et pour transmettre les données de module d'entrée à l'unité de télécommande (100).

2. Système selon la revendication 1, dans lequel l'unité de télécommande (100) comporte :
un module d'entrée par touches (10) destiné à recevoir une entrée de touche utilisée pour qu'un utilisateur télécommande lesdits multiples dispositifs électroniques ;
un module (20) de réception de télécommande destiné à recevoir des données de module d'entrée utilisées pour exécuter une opération de télécommande supplémentaire depuis le serveur de télécommande (400) ;
un module d'entrée de flux (30) destiné à créer un module d'entrée supplémentaire basé sur les données de module d'entrée reçues par l'intermédiaire du module de réception de télécommande et à fournir le module d'entrée par l'intermédiaire d'un écran tactile ;
un module de télécommande (40) destiné à générer un signal de télécommande pour un dispositif électronique prédéterminé si une entrée pour télécommander le dispositif électronique prédéterminé est reçue par l'intermédiaire du module d'entrée par touches (10) et le module d'entrée de flux (30) ; et
un module (50) d'émission de télécommande destiné à émettre le signal de télécommande généré depuis le module de télécommande (40) en passant par un canal infrarouge.

3. Système selon la revendication 1, dans lequel le serveur de télécommande (400) comporte un moyen de stockage destiné à stocker des données de canal infrarouge pour les dispositifs électroniques.

4. Système selon la revendication 3, dans lequel le dispositif (200) de conversion de signal de télécommande comporte :
un serveur web (210) destiné à accéder au serveur de télécommande (400) afin de recevoir des données de canal infrarouge pour un dispositif électronique ayant un nom de modèle correspondant, ou un numéro de modèle correspondant si un utilisateur applique en entrée le numéro de modèle ou le nom de modèle du dispositif électronique ;
une base de données (230) destinée à stocker des données de canal infrarouge reçues par l'intermédiaire du serveur web (210) ; et
une unité de commande de conversion (220) destinée à extraire de la base de données (230) des données de canal infrarouge pour le dispositif électronique correspondant au signal de télécommande reçu dans l'unité de télécommande (100), à insérer les données de canal infrarouge dans le signal de télécommande et à transmettre le signal de télécommande au réémetteur.

5. Système selon la revendication 4, dans lequel l'unité de commande de conversion (220) est conçue pour transmettre au réémetteur (300) le signal de télécommande comprenant les données de canal infrarouge en passant par une communication infrarouge.

6. Système selon la revendication 4, dans lequel l'unité de commande de conversion (220) est conçue pour transmettre au réémetteur le signal de télécommande comprenant les données de canal infrarouge en passant par un réseau sans fil.

7. Système selon la revendication 6, dans lequel le réseau sans fil est construit sur la base de l'un d'un réseau local sans fil et d'une communication Bluetooth.

8. Système selon la revendication 4, dans lequel l'unité de commande de conversion (220) est conçue pour transmettre au réémetteur, par un réseau câblé, le signal de télécommande comprenant les données de canal infrarouge.

9. Système selon la revendication 8, dans lequel le réseau câblé est construit sur la base de l'une d'une communication par ligne de puissance (PLC) et d'une communication 1394.

10. Système selon la revendication 4, dans lequel le dispositif (200) de conversion de signal de télécommande est connecté auxdits dispositifs électroniques par l'intermédiaire d'un réseau, dans lequel l'unité de commande de conversion (220) est conçue pour transmettre aux dispositifs électroniques, par l'intermédiaire du réseau, le signal de télécommande comprenant les données de canal infrarouge.

11. Système selon la revendication 4, dans lequel le dispositif de conversion de signal de télécommande est incorporé dans un dispositif de fourniture vidéo (500), et l'unité de commande de conversion (220) est conçue pour recevoir d'un utilisateur des numéros d'entrée extérieurs de dispositifs électroniques qui sont connectés à des accès d'entrée extérieurs du dispositif de fourniture vidéo.

12. Système selon la revendication 11, dans lequel l'unité de commande de conversion (220) est conçue pour recevoir d'un utilisateur des valeurs de réglage pour le dispositif de fourniture vidéo (500) conformément aux dispositifs électroniques connectés aux accès d'entrée extérieurs.

13. Système selon la revendication 11, dans lequel un dispositif électronique correspondant au signal de télécommande reçu de l'unité de télécommande (100) est connecté à l'accès d'entrée extérieur du dispositif de fourniture vidéo (500) et l'unité de commande de conversion (220) est conçue pour régler l'entrée extérieure du dispositif de fourniture vidéo en tant que numéro d'entrée extérieur pour le dispositif électronique, qui correspond au signal de télécommande.

14. Système selon la revendication 13, dans lequel l'unité de commande de conversion (220) est conçue pour déterminer une valeur de réglage du dispositif de fourniture vidéo correspondant à l'entrée extérieure réglée en tant que valeur de réglage introduite précédemment par un utilisateur.

15. Système selon la revendication 14, dans lequel, si un signal du dispositif électronique prédéterminé n'est pas appliqué en entrée par l'intermédiaire de l'entrée extérieure réglée pendant un intervalle de temps prédéterminé, l'unité de commande de conversion (220) est conçue pour transmettre au réémetteur (300) un signal de demande pour une réémission du signal de télécommande pour le dispositif électronique prédéterminé.

16. Système selon la revendication 15, dans lequel, si le réémetteur (300) reçoit le signal de demande pour une réémission du signal de télécommande depuis le dispositif (200) de conversion de signal de télécommande, le réémetteur est conçu pour retransmettre au dispositif de conversion de signal de télécommande un signal de télécommande correspondant au signal de demande pour la réémission.

17. Système selon la revendication 15, dans lequel, si le signal du dispositif électronique prédéterminé n'est pas appliqué en entrée par l'intermédiaire de l'entrée extérieure réglée pendant l'intervalle de temps prédéterminé, l'unité de commande de conversion (220) est conçue pour exécuter une opération de commande telle qu'un compte rendu, indiquant que le signal du dispositif électronique prédéterminé n'est pas en entrée, est exprimé sur un écran du dispositif de fourniture vidéo.

18. Système selon la revendication 15, dans lequel l'unité de commande de conversion (220) est conçue pour émettre le signal de demande pour la réémission du signal de télécommande et pour exécuter une opération de commande telle qu'un compte rendu, indiquant qu'un signal de télécommande pour le dispositif électronique prédéterminé est en chemin, est exprimé sur un écran du dispositif de fourniture vidéo.

19. Système selon la revendication 15, dans lequel, si l'unité de commande de conversion (220) reçoit un signal de télécommande pour un nouveau dispositif électronique prédéterminé connecté à un accès d'entrée extérieur du dispositif de fourniture vidéo, depuis l'unité de télécommande (100), l'unité de commande de conversion est conçue pour changer l'entrée extérieure du dispositif de fourniture vidéo en tant que numéro d'entrée extérieur réglé pour le nouveau dispositif électronique prédéterminé.

20. Système selon la revendication 19, dans lequel, si l'entrée extérieure du dispositif de fourniture vidéo (500) est modifiée, l'unité de commande de conversion est conçue pour transmettre au réémetteur un signal de demande pour arrêter temporairement un dispositif électronique prédéterminé correspondant à une entrée extérieure précédente, arrêtant ainsi temporairement le fonctionnement du dispositif électronique correspondant à l'entrée extérieure précédente.

21. Système selon la revendication 20, dans lequel, si le réémetteur reçoit le signal de demande pour un arrêt temporaire du dispositif électronique prédéterminé depuis le dispositif de conversion de signal de télécommande, le réémetteur est conçu pour transmettre au dispositif de conversion de signal de télécommande un signal de télécommande correspondant au signal de demande.

22. Système selon la revendication 21, dans lequel l'unité de commande de conversion (220) est conçue pour émettre un signal de demande afin d'arrêter le dispositif électronique en pause correspondant à l'entrée extérieure précédente si un intervalle de temps prédéterminé s'est écoulé.

23. Système selon la revendication 22, dans lequel, si le réémetteur (300) reçoit du dispositif de conversion de signal de télécommande le signal de demande pour arrêter le dispositif électronique prédéterminé, le réémetteur est conçu pour transmettre au dispositif de conversion de signal de télécommande un signal de télécommande correspondant au signal de demande.

24. Système selon la revendication 20, dans lequel, si l'unité de commande de conversion (220) reçoit un signal de télécommande pour le dispositif électronique correspondant à l'entrée extérieure précédente, l'unité de commande de conversion est conçue pour changer une entrée extérieure en cours du dispositif de fourniture vidéo en une entrée extérieure pour le dispositif électronique et pour transmettre au dispositif de conversion de signal de télécommande un signal de demande pour remettre en marche le dispositif électronique.

25. Système selon la revendication 24, dans lequel, si le réémetteur (300) reçoit du dispositif de conversion de signal de télécommande le signal de demande pour remettre en marche le dispositif électronique, le réémetteur est conçu pour transmettre au dispositif de conversion de signal de télécommande un signal de télécommande correspondant au signal de demande.

26. Système selon la revendication 4, dans lequel le réémetteur (300) comporte :
un module (310) de réception de signal destiné à recevoir du dispositif de conversion de signal de télécommande un signal de télécommande comprenant les données de canal infrarouge ;
une unité (320) de commande de réémission de signal destinée à générer séquentiellement des signaux de télécommande comprenant des ordres conformément à un macro-ordre si le signal de télécommande, qui comprend les données de canal infrarouge, reçu par l'intermédiaire du module de réception de signal est un signal pour l'exécution du macro-ordre ; et
un module (330) de réémission de signal destiné à générer un canal infrarouge conforme aux données de canal infrarouge incluses dans le signal de télécommande délivré en sortie de l'unité de commande de réémission de signal et à réémettre le signal de télécommande vers un dispositif électronique de destination en passant par le canal infrarouge.

27. Système selon la revendication 26, dans lequel le module (310) de réception de signal comprend un module (311) de réception de signal infrarouge qui reçoit le signal de télécommande qui lui est transmis par l'intermédiaire d'une communication infrarouge depuis le dispositif de conversion de signal de télécommande.

28. Système selon la revendication 26, dans lequel le module (310) de réception de signal comprend un module (313) de réception de signal de réseau sans fil qui reçoit le signal de télécommande qui lui est transmis par l'intermédiaire d'un réseau sans fil depuis le dispositif de conversion de signal de télécommande.

29. Système selon la revendication 28, dans lequel le réseau sans fil est construit sur la base de l'un d'un réseau local sans fil (WLAN) et d'une communication Bluetooth.

30. Système selon la revendication 26, dans lequel le module (310) de réception de signal comprend un module (313) de réception de signal de réseau câblé qui reçoit le signal de télécommande qui lui est transmis par l'intermédiaire d'un réseau câblé depuis le dispositif de conversion de signal de télécommande.

31. Système selon la revendication 30, dans lequel le réseau câblé est construit sur la base de l'une d'une communication par ligne de puissance (PLC) et d'une communication 1394.

32. Système selon la revendication 26, comportant en outre un module (340) de réseau pour l'émission/la réception du signal de télécommande comprenant les données de canal infrarouge vers/à partir d'un autre réémetteur ayant une structure identique,
dans lequel l'unité (320) de commande de réémission de signal est conçue pour réémettre le signal de télécommande vers un autre réémetteur ayant une structure identique dans une zone de couverture en passant par le module de réseau afin de transmettre, à un dispositif électronique se trouvant dans une zone de couverture, le signal de télécommande reçu par l'intermédiaire du module de réception de signal.
